(19) Europäisches Patentamt / European Patent Office / Office européen des brevets

(11) **EP 2 304 686 B1**

(12) **FASCICULE DE BREVET EUROPEEN**

(45) Date de publication et mention de la délivrance du brevet:
**18.04.2018 Bulletin 2018/16**

(51) Int Cl.:
**G06T 5/00** *(2006.01)*    **G06T 7/00** *(2017.01)*

(21) Numéro de dépôt: **09797575.9**

(22) Date de dépôt: **22.06.2009**

(86) Numéro de dépôt international:
**PCT/FR2009/051184**

(87) Numéro de publication internationale:
**WO 2010/007285 (21.01.2010 Gazette 2010/03)**

(54) **PROCEDE ET DISPOSITIF DE REMPLISSAGE DES ZONES D'OCCULTATION D'UNE CARTE DE PROFONDEUR OU DE DISPARITES ESTIMEE A PARTIR D'AU MOINS DEUX IMAGES**

VERFAHREN UND VORRICHTUNG ZUR FÜLLUNG VON VERDUNKELUNGSBEREICHEN IN EINER AUF BASIS MINDESTENS ZWEIER BILDER ENTWICKELTEN TIEFEN- ODER DISPARITÄTSKARTE

METHOD AND DEVICE FOR FILLING IN THE ZONES OF OCCULTATION OF A MAP OF DEPTH OR OF DISPARITIES ESTIMATED ON THE BASIS OF AT LEAST TWO IMAGES

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **24.06.2008 FR 0854157**

(43) Date de publication de la demande:
**06.04.2011 Bulletin 2011/14**

(73) Titulaire: **Orange**
**75015 Paris (FR)**

(72) Inventeurs:
- **ALESSANDRINI, David**
  **F-35235 Thorigne Fouillard (FR)**
- **BALTER, Raphaèle**
  **F-35250 Saint Sulpice La Foret (FR)**
- **PATEUX, Stéphane**
  **F-35700 Rennes (FR)**

(74) Mandataire: **Millet, Sandrine**
**Orange**
**IMTW/OLPS/IPL/PAT**
**Orange Gardens**
**44 Avenue de la République**
**CS 50010**
**92326 Châtillon Cedex (FR)**

- **FAN LIANGZHONG ET AL: "Dynamic programming based ray-space interpolation for free-viewpoint video system" HIGH TECHNOLOGY LETTERS, SCIENCE PRESS, BEIJING, CN, vol. 14, no. 1, 1 mars 2008 (2008-03-01), pages 72-76, XP008102045 ISSN: 1006-6748**
- **YANNICK MORVAN ET AL: "Design Considerations for View Interpolation in a 3D Video Coding Framework"[Online] juin 2006 (2006-06), XP002515048 Extrait de l'Internet: URL:http://vca.ele.tue.nl/publications/dat a/Morvan2006b.pdf> [extrait le 2009-02-10] cité dans la demande**
- **ABHIJIT OGALE ET AL: "Occlusions in motion processing"[Online] mars 2004 (2004-03), XP002515049 Extrait de l'Internet: URL:http://www.bmva.ac.uk/meetings/04/24ma r/stip_aloimonos.pdf> [extrait le 2009-02-10] cité dans la demande**
- **LIU CHAOHUI ET AL: "Efficient stereo disparity estimation for intermediate view synthesis" THE 47TH IEE INTERNATIONAL MIDWEST (CAESAR WONT ACCEPT JOURNAL NAME INVALID INPUT),, vol. 3, 25 juillet 2004 (2004-07-25), pages III_483-III_486, XP010739247 ISBN: 978-0-7803-8346-3**

(56) Documents cités:

- WEI WEI ET AL: "Disparity Estimation with Edge-Based Matching and Interpolation" INTELLIGENT SIGNAL PROCESSING AND COMMUNICATION SYSTEMS, 2005. ISPACS 2005. PROCEEDINGS OF 2005 INTERNATIONAL SYMPOSIUM ON HONG KONG 13-16 DEC. 2005, PISCATAWAY, NJ, USA,IEEE, 13 décembre 2005 (2005-12-13), pages 153-156, XP010894559 ISBN: 978-0-7803-9266-3

**Description**

La présente invention concerne le traitement d'images numériques et en particulier une technique de remplissage des zones d'occultations présentes dans une carte de profondeur ou une carte de disparités, estimée à partir d'au moins deux images.

Dans les applications de vidéo en trois dimensions (vidéo 3D) telles que la visualisation en relief, la reconstruction de scènes en trois dimensions ou la navigation virtuelle dans des vidéos, on utilise classiquement des cartes dites "de profondeur" ou bien des cartes dites "de disparités". Les cartes précitées sont obtenues par estimation à partir d'au moins deux images d'une même scène provenant de vidéos stéréoscopiques ou multi-vues capturées par plusieurs caméras, ou encore correspondant à des instants temporels différents d'une même vidéo.

Concernant en particulier la transmission des contenus stéréoscopiques deux approches sont généralement utilisées. Selon une première approche, on utilise une paire de caméras traditionnelles, positionnées de manière à reproduire le système visuel humain, chaque caméra correspondant à un oeil. Les deux séquences monoscopiques capturées sont ainsi transmises à l'utilisateur. Une autre approche consiste à transmettre seulement une vidéo de couleur monoscopique accompagnée d'une information de profondeur associée à chaque pixel. Dans ce cas, une ou plusieurs vues "virtuelles" peuvent être synthétisées du côté utilisateur au moyen d'algorithmes de rendu à base de cartes de profondeur. Cette dernière approche présente notamment l'avantage de diminuer la bande passante totale utilisée pour la transmission, et trouve une application directe dans le codage vidéo avec compression de données.

Pour définir ce que l'on désigne classiquement par "carte de profondeur" et "carte de disparités", on considère afin de simplifier l'exposé le cas particulier de la stéréovision binoculaire, selon laquelle deux images d'une même scène sont prises, par exemple par une caméra, depuis deux points de vue différents. Les deux images sont classiquement désignées par image droite et image gauche. Dans ce contexte, une carte de profondeur correspondant à une image donnée (image droite ou image gauche par exemple) est une image numérique dont chaque pixel est associé à une valeur représentative d'une couleur (nuance de gris par exemple) qui est caractéristique de la distance du pixel considéré à la caméra.

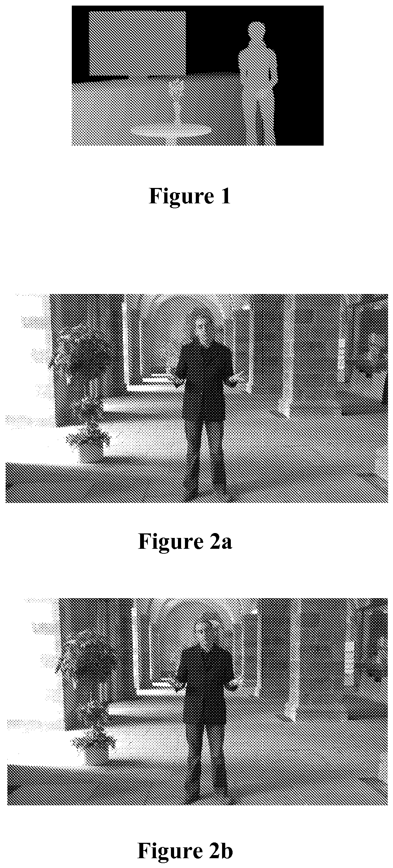

La **Figure 1** illustre une carte de profondeur dans laquelle la distance des objets figurants sur l'image par rapport à la caméra ayant filmé la scène, est représentée par un niveau de gris allant du blanc pour les objets les plus proches, au noir pour les objets les plus éloignés. Ainsi, dans cet exemple, la table et le vase contenant des fleurs, de teinte plus claire, sont les objets de la scène les plus proches (premier plan), et l'écran représenté semble être l'objet le plus éloigné (arrière-plan).

Les **Figures 2a** et **2b** représentent un couple d'images stéréoscopiques à partir duquel une carte de profondeur peut être estimée. La Figure 2a représente l'image de gauche et la Figure 2b l'image de droite.

Une carte de disparités traduit, quant à elle, le résultat de la mise en correspondance stéréoscopique des deux images précitées. La mise en correspondance stéréoscopique consiste à retrouver dans les images gauche et droite, des pixels homologues, c'est-à-dire des pixels qui sont la projection de la même entité de la scène. La carte de disparités est une façon de représenter visuellement les résultats de cette mise en correspondance : chaque pixel de la carte de disparités représente l'amplitude de la disparité, c'est-à-dire la distance entre la position du pixel de l'image gauche et celle de son correspondant dans l'image droite. Ainsi, chaque pixel de la carte de disparités est associé à une valeur représentative d'une couleur caractéristique de l'amplitude de la disparité. De manière classique, on utilise encore des nuances de gris : par exemple, plus le pixel est sombre et plus la disparité est faible, les pixels complètement blancs représentant les pixels sans correspondant dans l'une des deux images.

On peut facilement démontrer que plus la valeur de profondeur associée à un pixel donné d'une image, est grande, et plus la valeur de disparité correspondante, est faible. La profondeur et la disparité étant ainsi deux grandeurs inversement proportionnelles, la présente invention peut s'appliquer aussi bien à une carte de profondeur qu'à une carte de disparités. Dans la suite de la description, on parle ainsi indifféremment d'une carte de profondeur ou d'une carte de disparités et l'on utilise parfois le terme "carte" pour désigner l'une ou l'autre de ces cartes.

L'utilisation de cartes de profondeur ou de disparités est de première importance dans le cadre des techniques émergeantes telles que par exemple la navigation virtuelle dans une vidéo, la visualisation en relief, la modélisation 3D, et le codage vidéo. Les cartes de profondeur issues de prédiction inter-vues peuvent aussi être utilisées pour les applications de compression par prédiction de vues exploitant des cartes de profondeur. Dans ce type d'approche, les cartes de profondeur sont utilisées pour prédire les vues correspondant à d'autres vidéos de la même scène afin de limiter la transmission de redondance notamment dans le cas de données MVD (*Multiview Video and Depth*) composées de plusieurs vidéos et cartes de profondeur associées. La précision de ces cartes est par conséquent déterminante dans la qualité des vues reconstruites quelle que soit l'application finale, et pour l'efficacité d'une compression vidéo, pour les applications de codage.

En particulier, la qualité d'une carte de profondeur/disparités, est liée à la présence dans la carte considérée de zones dites "d'occultations". Les zones d'occultations correspondent aux zones de la carte pour lesquelles les pixels n'ont pas de correspondant dans une des images, avec une partie visible dans une seule image. Ces zones d'occultation sont essentiellement dues aux objets de la scène dits occultants, c'est-à-dire les objets qui, dans une des deux images (droite ou gauche) occultent une région particulière de la scène représentée, alors que cette région est directement visible dans l'autre image. On trouve les zones d'occultation essentiellement autour de frontières dues à des discontinuités de profondeur sur les cartes.

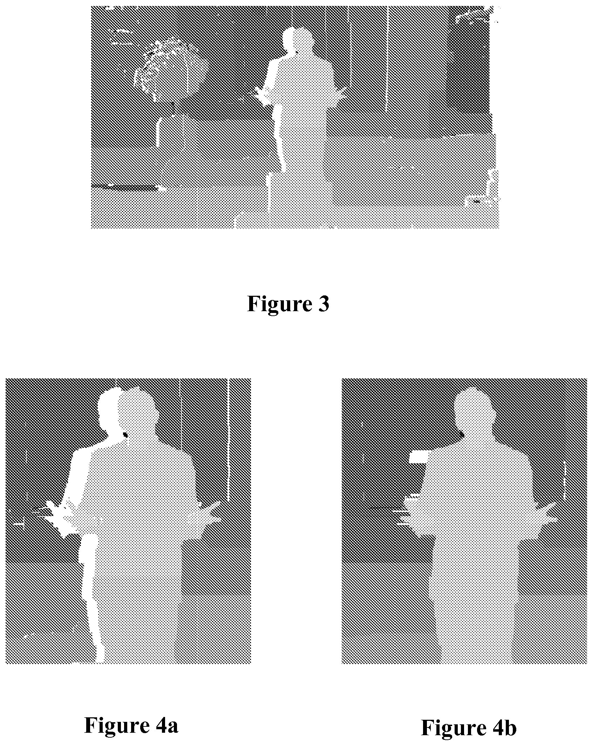

La **Figure 3** représente un exemple de carte de disparités estimée en utilisant un algorithme connu à base de coupures de graphes. Plus précisément, l'algorithme utilisé est décrit par exemple dans le document "Multi-camera scene reconstruction via graph cuts" de V. Kolmogorov and R. Zabih - Proceedings of the European Conference on Computer Vision, 2002.

Sur l'image représentée, les zones de couleur blanche correspondent aux zones d'occultation détectées par l'algorithme à coupures de graphes précité, et pour lesquelles une valeur de pixel n'a pas pu être déterminée faute de correspondants dans les deux images gauche et droite représentées respectivement par les Figures 2a et 2b.

Il est nécessaire par conséquent de prendre en compte ces zones d'occultation présentes dans les cartes de profondeur ou de disparités afin d'améliorer la qualité des images obtenues par reconstruction ou par synthèse à partir de ces cartes. Il s'agit en particulier de détecter et/ou de combler les trous correspondant à de l'information manquante dans les zones d'occultation.

Parmi les techniques connues pour traiter les défauts précités des cartes de profondeur ou de disparités, on peut distinguer en particulier une première catégorie de techniques : celles qui opèrent sur les images reconstruites à partir des cartes de profondeur ou de disparités.

Des solutions appartenant à cette première catégorie sont décrites par exemple dans le document "Stereoscopic imaging: Filling disoccluded areas in image-based rendering" de C. Vázquez, W. J. Tam, and F. Speranza - Proceedings of the SPIE Three-Dimensional TV, Video, and Display, Vol. 6392, pp. 0D1-0D12, 2006. Selon ces solutions, les trous dans les images reconstruites sont comblés en propageant une valeur issue du voisinage. Cependant cette catégorie de techniques qui opère sur les images reconstruites à partir des cartes de profondeur ou de disparités, présente l'inconvénient d'exploiter peu, voire pas du tout, les spécificités des cartes de profondeurs. En effet, ces cartes représentent des données ayant des particularités différentes des images 2D (deux dimensions) texturées, telles que l'absence de détails de texture, et l'impact sur les profondeurs des positions relatives des objets entre eux.

Une seconde catégorie de techniques connues opère directement sur les cartes de profondeur ou de disparités. Par exemple, le document : "Improving depth maps by nonlinear diffusion", de J. Yin and J. R. Cooperstock - Proc. 12th International Conference Computer Graphics, Visualization and Computer Vision, Plzen, Czech Republic, Feb. 2004, décrit un post-traitement applicable à une carte de profondeur de manière à en améliorer les zones d'occultation ou d'absence de texture. Ce post-traitement est basé sur un remplissage par une diffusion non linéaire, c'est-à-dire un lissage gaussien combiné à une détection de bords.

Une autre technique décrite dans le document "Design Considerations for View Interpolation in a 3D Video Coding Framework" de Yannick Morvan, Dirk Farin, et Peter H.N. de With - in 27th Symposium on Information Theory in the Benelux, vol. 1 p., June 2006, Noordwijk, Netherlands - consiste à propager le fond en comparant les valeurs de profondeur des deux pixels valides les plus proches d'un pixel en occultation.

Les **Figures 4a** et **4b** représentent respectivement un détail de la carte de disparités de la Figure 3, et le même détail après remplissage des zones d'occultation selon une technique connue à base de coupures de graphes. L'image représentée à la Figure 4b montre ainsi le même détail de la carte de disparités de la Figure 3, mais après remplissage des zones d'occultation selon un algorithme consistant à parcourir ligne-par-ligne l'image et à remplir un pixel invalide d'une zone d'occultation par le premier pixel valide (non occulté) qui suit le pixel invalide sur la ligne en cours (le sens de parcours de la ligne est fonction de l'image à laquelle la carte de profondeurs est associée). Un tel algorithme de remplissage est décrit par exemple dans le document "Occlusions in motion processing" de Abhijit Ogale, Cornelia Fermuller et Yiannis Aloimonos - in SpatioTemporal Image Processing, March 2004, London, UK.

Sur l'image de la Figure 4b, obtenue après remplissage, les zones de couleur blanche qui sont visibles à gauche du personnage, notamment autour de sa main droite, correspondent à des erreurs produites lors du remplissage des zones d'occultations. Ces erreurs sont principalement dues, soit à des pixels d'une zone d'occultation pour lesquels une valeur a été affectée par erreur et qui perturbent ainsi le remplissage, soit à la propagation de mauvaises valeurs lors du remplissage, ce qui provoquent des pertes de détails, comme par exemple, autour de la main droite de la personne représentée sur l'image.

Les techniques qui opèrent directement sur les cartes de profondeur ou de disparités, présentent ainsi les inconvénients de ne pas gérer les erreurs ou artefacts dans les zones d'occultation et/ou de générer un aspect de flou, notamment sur les bords des objets représentés, à cause des traitements appliqués. De plus, en ne comparant que les valeurs des premiers pixels voisins valides d'un pixel invalide, on n'est pas assuré de propager le fond, notamment dans le cas d'objets concaves.

Par conséquent, les techniques précitées ne traitent que partiellement les défauts des cartes de profondeur ou de disparités, et les artefacts, la propagation de mauvaises valeurs et la perte de détails, qui résultent des défauts de ces cartes en raison de la présence de zones d'occultation, provoquent des incohérences dans les images reconstruites, ainsi que lors de la visualisation en relief à l'aide d'images prédites à partir de cartes de profondeur/disparités. En outre Fan Liangzhong et al. décrivent dans "Dynamic programming based ray-space interpolation for free-viewpoint video system" un procédé de remplissage d'une carte de disparité par interpolation. Ainsi, il existe un réel besoin d'améliorer la qualité des cartes de disparités et de profondeurs et notamment en ce qui concerne la précision autour des contours des objets.

Pour répondre notamment au besoin exposé ci-dessus, la présente invention concerne, selon un premier aspect, un procédé de remplissage des zones d'occultation d'une carte de profondeur ou de disparités.

Selon ce procédé, la carte est estimée à partir d'au moins deux images et est constituée d'une matrice de pixels formant un ensemble de lignes et de colonnes, chaque pixel de la carte étant associé à une valeur de profondeur ou de disparités, dite "valeur de pixel", et un pixel quelconque d'une zone d'occultation, dit "pixel invalide", étant associé à une valeur de pixel identifiable comme étant invalide.

Conformément à l'invention définie par la revendication 1, le procédé comprend :

- le parcours pixel-par-pixel de chaque ligne de la carte dans un sens prédéfini, et
- l'affectation à chaque pixel invalide Pi rencontré sur une ligne courante, d'une valeur déterminée en fonction des valeurs associées aux pixels appartenant à un voisinage prédéfini autour du premier pixel valide P1, s'il existe, qui suit le pixel invalide Pi sur la ligne courante et dont la valeur, V(P1), correspond à une profondeur supérieure ou à une disparité inférieure par rapport à la valeur, V(P0), du dernier pixel valide, P0, s'il existe, qui précède le pixel invalide Pi sur la ligne courante.

Un tel remplissage des zones d'occultation obtenu en affectant aux pixels invalides une valeur obtenue comme exposé ci-dessus, permet de propager le fond - c'est-à-dire les valeurs de plus grande profondeur ou de plus petite disparité - et uniquement celui-ci, puisque les zones d'occultation dues à un objet occultant sont toujours situées du même coté des objets situés en arrière de l'objet occultant et qui sont pris en compte dans le parcours des lignes dans le sens prédéfini. En contraignant la valeur de profondeur (disparités) affectée à un pixel invalide, à être bien supérieure (inférieure) à la dernière valeur parcourue de la ligne avant la zone d'occultation, on s'assure que c'est bien une valeur correspondant au fond qui sera utilisée pour remplir les trous. Le remplissage des trous selon l'invention permet notamment d'éviter que les pixels d'un objet plutôt que le fond soient propagés et le cas échéant que des parties de l'image soient alors reliées alors qu'elles ne devraient pas l'être, comme cela arrive fréquemment en particulier avec les objets concaves. Ainsi l'on pourra en particulier conserver des détails au sein d'un même objet concave, par exemple dans le cas d'un humain, en préservant notamment la distinction des bras et des mains.

Selon des caractéristiques préférées du procédé de l'invention :

- S'il existe un pixel valide P0 mais qu'il n'existe pas de pixel valide P1, alors on affecte au pixel invalide Pi une valeur de pixel déterminée en fonction des valeurs associées aux pixels appartenant à un voisinage prédéfini autour du premier pixel valide P2, s'il existe, qui suit le pixel invalide Pi sur la ligne courante.
- S'il n'existe pas de pixel valide P2, alors on affecte au pixel invalide Pi une valeur de pixel déterminée en fonction des valeurs associées aux pixels appartenant à un voisinage prédéfini autour du pixel P0.
- S'il n'existe pas de pixel valide P0, on affecte au pixel invalide Pi une valeur de pixel déterminée en fonction des valeurs associées aux pixels appartenant à un voisinage prédéfini autour du premier pixel valide P2, s'il existe, qui suit le pixel invalide Pi sur la ligne courante ; sinon, si un pixel valide P2 n'existe pas, on affecte au pixel invalide Pi une valeur par défaut Vd.

Selon un mode de réalisation préféré de l'invention, la valeur de pixel affectée au pixel invalide Pi est déterminée en fonction des valeurs associées aux pixels du voisinage d'un pixel considéré, par application de la fonction de médiane ou de moyenne mathématique aux valeurs de pixels du voisinage considéré.

En pratique, un voisinage autour d'un pixel considéré est constitué d'un bloc de pixels valides centré sur le pixel considéré. En outre selon l'invention la carte de profondeur ou de disparité est obtenue à partir d'un couple d'images droite et gauche, le sens prédéfini de parcours d'une ligne de pixels considérée de la carte, correspond au sens de la droite vers la gauche si la carte est estimée à partir de l'image gauche, et correspond au sens de la gauche vers la droite si la carte est estimée à partir de l'image droite.

En effet, les zones d'occultation sont les zones qui se découvrent lorsqu'on passe d'une caméra à l'autre, et sont donc essentiellement situées à gauche (respectivement droite) des objets pour l'image droite (respectivement gauche) pour des images parallèles ou rectifiées (c'est-à-dire correspondant à une capture avec des caméras convergentes, mais pour lesquelles les lignes épipolaires des deux images ont été alignées).

La présente invention concerne également un procédé de traitement numérique d'une carte de profondeur ou de disparités selon la revendication 7, incluant une étape de remplissage des zones d'occultation de la carte, selon un procédé de remplissage tel que brièvement défini supra.

Selon des caractéristiques particulières du procédé de traitement numérique selon l'invention, l'opération de remplissage des zones d'occultation, peut être précédée :

- d'une opération de filtrage morphologique de fermeture, destinée à éliminer les erreurs d'estimation dans les zones d'occultation de la carte ; et/ou,
- d'une opération d'uniformisation locale de la carte, mettant en oeuvre sur l'ensemble de la carte, un filtrage médian des valeurs des pixels analysés par bloc de taille prédéfinie.

Corrélativement, la présente invention a pour objet un dispositif de traitement numérique d'une carte de profondeur ou de disparités selon la revendication 10, ce dispositif étant remarquable en ce qu'il inclut un module de remplissage des zones d'occultation de la carte, ce module étant apte à mettre en oeuvre un procédé de remplissage selon l'invention, tel que brièvement défini supra.

L'invention a encore pour objet un programme d'ordinateur de traitement d'images numériques selon la revendication 13, remarquable en ce qu'il comporte des instructions aptes à mettre en oeuvre un procédé selon l'invention de traitement numérique d'une carte de profondeur ou de disparités, lorsque ce programme est exécuté dans un système d'ordinateur. On entend ici par "système d'ordinateur" tout dispositif à base de processeur, adapté au traitement de données numériques.

Les avantages procurés par un programme d'ordinateur et un dispositif de traitement numérique selon l'invention, incluent notamment ceux mentionnés plus haut en relation avec le procédé de remplissage ou le procédé de traitement numérique, selon l'invention, d'une carte de profondeur/disparités.

L'invention sera mieux comprise à la lecture de la description détaillée qui va suivre, donnée uniquement à titre d'exemple et faite en se référant aux dessins sur lesquels :

- la Figure 1 déjà commentée représente un exemple de carte de profondeur ;
- les Figures 2a et 2b déjà commentées représentent un couple d'images stéréoscopiques à partir duquel une carte de profondeur peut être estimée ;
- La Figure 3 déjà commentée représente un exemple de carte de disparités estimée en utilisant un algorithme connu à base de coupures de graphes ;
- Les Figures 4a et 4b déjà commentées représentent respectivement un détail de la carte de disparités de la Figure 3, et le même détail après remplissage des zones d'occultation selon une technique connue de l'état de la technique ;
- Les Figure 5a et 5b représentent un organigramme illustrant les étapes principales d'un procédé, selon l'invention, de remplissage des zones d'occultations dans une carte de profondeur ou de disparités ;
- La Figure 6 illustre un mode de réalisation d'un procédé et dispositif de traitement numérique d'une carte de profondeur/disparités, selon l'invention, dans lequel l'opération de remplissage est précédée par une opération d'élimination des erreurs d'estimation de la carte et par une opération d'uniformisation locale de la carte ;
- Les Figures 7a et 7b représentent respectivement le même détail de la carte représentée à la Figure 4a, avant application d'un filtre morphologique (Figure 7a), et après application d'un filtre morphologique (Figure 7b) ;
- Les Figures 8a et 8b illustrent le résultat de l'application d'un filtre d'uniformisation locale sur une carte de disparités obtenue après application d'un filtre morphologique, les Figures 8a et 8b montrant respectivement la carte avant et après application du filtre d'uniformisation locale ; et
- La Figure 9 montre la carte de disparités de la Figure 8b après traitement de remplissage des zones d'occultations, selon la présente invention.

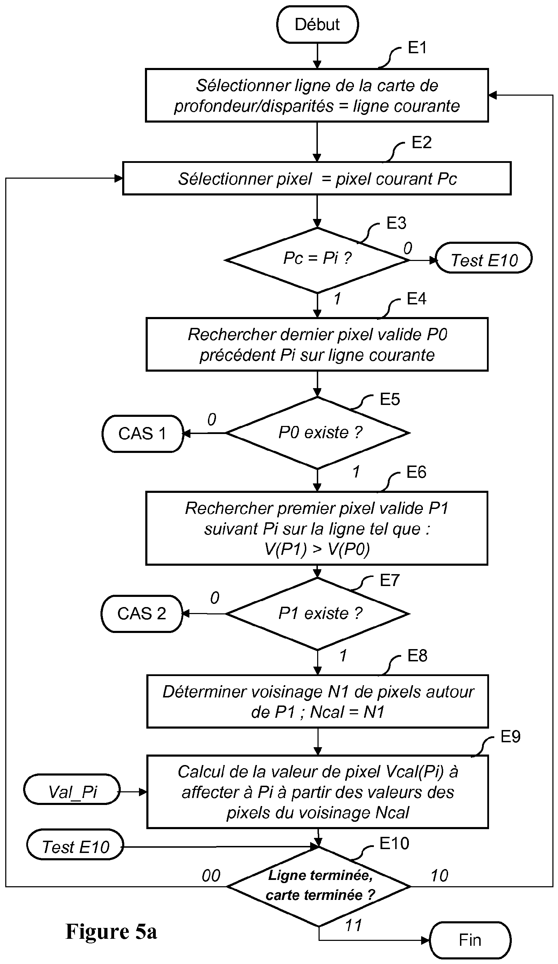

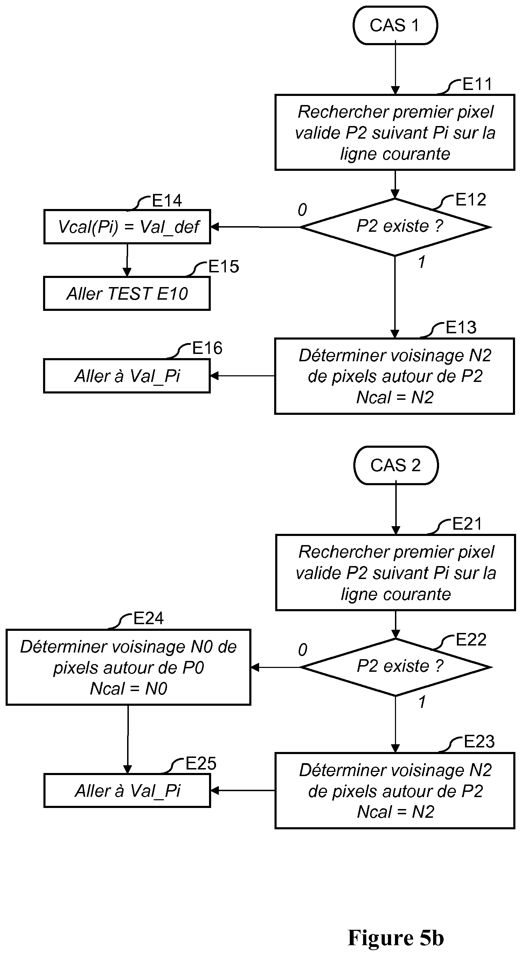

Les **Figures 5a** et **5b** représentent un organigramme illustrant les étapes principales d'un procédé, selon l'invention, de remplissage des zones d'occultations dans une carte de profondeur ou de disparités. Comme mentionné précédemment, l'invention s'applique indifféremment à une carte de profondeur ou à une carte de disparités, puisque ces cartes correspondent à des données inversement proportionnelles.

Le procédé de l'invention s'applique à une carte de profondeur ou de disparités estimée à partir d'au moins deux images, par exemple une image droite et une image gauche, ou bien obtenue par prédiction à partir d'une autre vue, comme c'est le cas par exemple avec les algorithmes de compression basés prédiction inter-vues.

La carte en question est constituée classiquement d'une matrice de pixels formant un ensemble de lignes et de colonnes. Chaque pixel de la carte est associé à une valeur de profondeur ou de disparités, dite "valeur de pixel". Typiquement cette valeur est une valeur binaire codée sur 8 bits et pouvant prendre les valeurs décimales comprises entre 0 et 255. Dans cet intervalle de valeurs, certaines correspondent à des valeurs de profondeur/disparités valides, et une valeur particulière correspond à une valeur invalide. Ainsi typiquement, si la couleur choisie pour représenter les zones d'occultation est la couleur blanche, la valeur de profondeur/disparités associée est alors la valeur décimale 255. Ainsi, un pixel de la carte considérée qui correspond à une zone d'occultation est identifiable comme étant invalide grâce à la valeur de pixel qui lui est associée.

En pratique, le procédé de remplissage des zones d'occultation d'une carte de profondeur/disparités selon l'invention est mis en oeuvre par un programme d'ordinateur exécuté dans un système informatique, la carte traitée étant mémorisée au préalable dans le système informatique. Le procédé selon l'invention consiste à parcourir ligne-par-ligne et pour chaque ligne, pixel-par-pixel, la carte de profondeur/disparités (désignée ci-après également par le terme "carte"). Ce parcours pixel-par-pixel s'effectue dans un sens prédéfini.

Ainsi, en pratique, si la carte considérée a été obtenue à partir d'un couple d'images droite et gauche, le sens de parcours d'une ligne de pixels de la carte correspond au sens de la droite vers la gauche, si la carte a été estimée à partir de l'image gauche. En revanche si la carte a été estimée à partir de l'image droite, le sens de parcours est effectué de la gauche vers la droite.

Comme représenté à la **Figure 5a,** le procédé de remplissage des zones d'occultations d'une carte de profondeur/disparités selon l'invention, débute par une étape de sélection (E1) d'une ligne de la carte, dite ligne courante, puis de sélection (E2) d'un pixel de la ligne sélectionnée, dit pixel courant et noté Pc.

À l'étape de test E3, on détermine si le pixel courant Pc est un pixel invalide ou non, selon que la valeur de pixel qui lui est associée correspond ou non à une valeur invalide (par exemple la valeur 255, correspondant à la teinte blanche). Si le pixel courant est valide (test E3, '0'), par conséquent il n'appartient pas à une zone d'occultation, on exécute alors l'étape de test E10 consistant à déterminer si le traitement de la ligne courante est terminé et si le traitement complet de la carte a été effectué.

Ainsi à l'étape E10, si le traitement de la ligne courante n'est pas terminé (E10, '00'), on retourne à l'étape E2 pour sélectionner le pixel suivant de la ligne en cours. Si la ligne courante a été traitée, mais non toutes les lignes de la carte (E10, '10') alors on retourne à l'étape E1 afin de sélectionner une autre ligne de la carte, par exemple la ligne immédiatement inférieure à la ligne traitée. Enfin, si toutes les lignes de la carte ont été parcourues et traitées, le traitement de la carte est terminé (E10, '11').

Si, à l'étape E3, le pixel courant Pc est déterminé comme étant invalide (Pc = Pi ; E3, '1'), on recherche alors (étape E4) le dernier pixel valide, noté P0, précédant le pixel invalide Pi considéré sur la ligne. En pratique, au cours du parcours d'une ligne quelconque de la carte, des informations concernant chacun des pixels examinés sont mémorisées (position, validité, valeur associée, ...) ce qui permet d'obtenir ensuite très rapidement les informations relatives à un pixel déjà examiné.

Si un tel pixel P0 existe (E5, '1'), on recherche alors (étape E6) en parcourant la ligne courante dans le sens prédéfini, un premier pixel valide P1 qui suit le pixel invalide Pi sur la ligne, et tel que la valeur de pixel, V(P1), qui lui est associée, corresponde à une profondeur supérieure (ou à une disparité inférieure si le procédé est appliqué à une carte de disparités) par rapport à la valeur V(P0) du pixel P0. Le pixel P1 recherché qui correspond à une profondeur supérieure par rapport au pixel P0, est traduit symboliquement, à la Figure 5a, par l'inégalité : V(P1) > V(P0).

En pratique, la recherche d'un pixel valide situé après le pixel invalide Pi considéré, est effectuée dans un intervalle défini en nombre de pixels, dont la taille est fixée, par exemple 50 pixels, et qui peut être modifiée par l'utilisateur du procédé selon l'invention.

Si un tel pixel P1 existe (étape E7, '1'), on détermine alors, à l'étape E8, un voisinage, N1, de pixels autour du pixel P1, puis on calcule à l'étape E9 la valeur de profondeur (ou de disparité), notée Vcal(Pi), à affecter au pixel invalide Pi.

Selon l'invention, la valeur de profondeur, Vcal(Pi), est déterminée en fonction des valeurs de profondeur (ou disparités) associées aux pixels appartenant au voisinage N1 de pixels autour du pixel P1, l'expression "Ncal = N1" à l'étape E8, représentant symboliquement l'affectation du voisinage N1 de pixels, au calcul de la valeur de profondeur Vcal(Pi).

En pratique, un voisinage déterminé autour d'un pixel considéré pourra être constitué d'un bloc de pixels centré sur le pixel en question, par exemple, un bloc constitué de 5 pixels valides.

Selon un mode de réalisation préféré de l'invention, la valeur, Vcal(Pi), à affecter au pixel invalide Pi considéré, est déterminée en calculant la médiane mathématique des valeurs des pixels appartenant au voisinage de pixels considéré. En variante, on peut utiliser la moyenne mathématique au lieu de la médiane. Ainsi, s'il s'agit du voisinage N1 de pixels autour du pixel P1, on calcule la médiane des valeurs de profondeur (ou de disparités) associées aux pixels du voisinage N1.

De retour à l'étape E7, si un pixel P1 valide qui suit le pixel invalide Pi et qui correspond à une profondeur supérieure par rapport au pixel P0, n'existe pas sur la ligne en cours de la carte (étape E7, '0'), le traitement appliqué est désigné par "CAS 2" et est illustré à la **Figure 5b.** Dans ce cas, on recherche (étape E21) le premier pixel valide, noté P2, qui suit le pixel invalide Pi sur la ligne courante. Si un tel pixel P2 existe (E22, '1'), on détermine (étape E23) un voisinage, N2, de pixels autour du pixel P2, comme exposé précédemment, puis on retourne à l'étape E9 de la Figure 5a (via l'étape E25 de la Figure 5b). A l'étape E9 (étiquetée 'Val_Pi'), on calcule la valeur de profondeur (ou de disparité), notée Vcal(Pi), à affecter au pixel invalide Pi, en fonction des valeurs de profondeur (ou disparités) associées aux pixels appartenant au voisinage N2 de pixels autour du pixel P2. En pratique, on calcule la médiane mathématique des valeurs de profondeur (ou de disparités) associées aux pixels du voisinage N2.

En revanche, si un tel pixel P2 n'existe pas (étape E22, '0'), on utilise alors le pixel P0 déterminé précédemment (étape E4), on détermine ainsi (étape E24) un voisinage de pixels, noté N0, autour du pixel P0, comme exposé précédemment. On retourne ensuite à l'étape E9 de la Figure 5a (via l'étape E25 de la Figure 5b). A l'étape E9, on calcule la valeur de profondeur (ou de disparité), notée Vcal(Pi), à affecter au pixel invalide Pi, en fonction des valeurs de profondeur (ou de disparité) associées aux pixels appartenant au voisinage N0 de pixels autour du pixel P0. En pratique, on calcule la médiane mathématique des valeurs de profondeur (ou de disparités) associées aux pixels du voisinage N0.

Enfin, à l'étape E5 de la Figure 5a, s'il n'existe pas (E5, '0') de pixel valide P0 précédant le pixel invalide Pi sur la ligne courante, le traitement appliqué est désigné par "CAS 1" et est illustré à la Figure 5b. Dans ce cas, on recherche (étape E11) le premier pixel valide, noté P2, qui suit le pixel invalide Pi sur la ligne courante. Si un pixel P2 existe (E12, '1'), on détermine (étape E13) un voisinage, N2, de pixels autour du pixel P2, comme exposé précédemment, puis on retourne à l'étape E9 de la Figure 5a (via l'étape E16 de la Figure 5b). A l'étape E9, on calcule la valeur de profondeur (ou de disparité), notée Vcal(Pi), à affecter au pixel invalide Pi, en fonction des valeurs de profondeur (ou disparités) associées aux pixels appartenant au voisinage N2 de pixels autour du pixel P2. En pratique, on calcule la médiane mathématique des valeurs de profondeur (ou de disparités) associées aux pixels du voisinage N2.

En revanche, si un tel pixel P2 n'existe pas (étape E12, '0'), on affecte (étape E14) au pixel Pi une valeur par défaut, notée Val_def. Ensuite, on retourne (E15) au test E10 de la Figure 5a, précédemment décrit.

En pratique, la valeur par défaut, Val_def, affectée au pixel invalide Pi est choisie, à titre d'exemple, comme étant égale à 128, ce qui correspond à la profondeur (ou de disparité) moyenne.

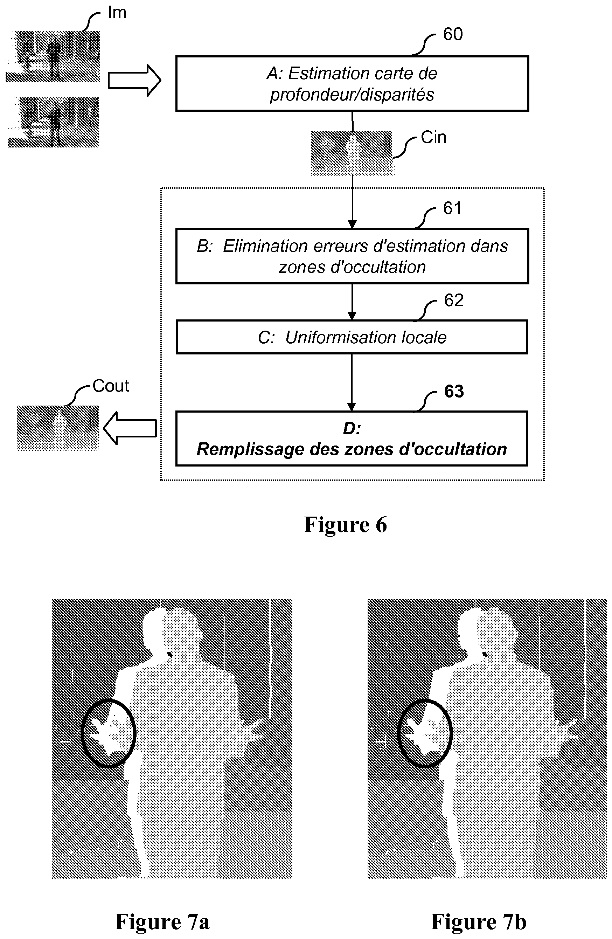

La **Figure 6** illustre un mode de réalisation d'un procédé et dispositif de traitement numérique d'une carte de profondeur/disparités, selon l'invention, dans lequel l'opération de remplissage est précédée par une opération d'élimination des erreurs d'estimation de la carte et par une opération d'uniformisation locale de la carte.

Comme représenté à la Figure 6, un dispositif de traitement numérique d'une carte de profondeur ou de disparités selon l'invention comprend un module 63 de remplissage des zones d'occultations de la carte, et peut en outre inclure l'un au moins des deux modules additionnels 61 et 62 dont la fonction respective est décrite plus bas. Enfin, un dispositif de traitement numérique d'une carte de profondeur/disparités selon l'invention peut aussi inclure un module 60 d'estimation d'une carte de profondeur ou de disparités à partir de plusieurs images.

En pratique, selon un mode de réalisation préférentiel, ces modules sont constitués par un ensemble de programmes d'ordinateur formant un ensemble logiciel comprenant des instructions adaptées à la mise en oeuvre d'un procédé de traitement numérique d'une carte de profondeur/disparités selon l'invention. Ce procédé est alors mis en oeuvre lorsque l'ensemble précité de programmes est exécuté dans un ordinateur ou système informatique.

Dans l'exemple de mise en oeuvre représenté à la Figure 6, deux images 'Im' (droite et gauche) d'une même scène sont fournies au module logiciel 60 chargé de mettre en oeuvre une opération, notée A, d'estimation d'une carte de disparités à partir des deux images Im. Par exemple, le module 60 peut mettre en oeuvre un algorithme à base de coupures de graphes, par exemple celui mentionné précédemment et décrit dans le document "Multi-camera scene reconstruction via graph cuts" de V. Kolmogorov and R. Zabih - Proceedings of the European Conference on Computer Vision, 2002. Le module 60 délivre par conséquent en sortie une carte de disparités Cin, telle que celle représentée à la Figure 3.

Dans le mode de réalisation illustré et décrit, la carte de disparités Cin est prise en charge par un module 61 d'élimination des erreurs d'estimation (*outlier* en anglais) faites par le module 60 lors de l'estimation de la carte de disparités (ou de profondeur) relatives aux images d'entrée (Im). Ces erreurs sont essentiellement dues aux zones d'occultation présentes dans la carte de disparités. Selon un exemple de réalisation, le module 61 met en oeuvre un filtre morphologique de fermeture, connu en soi, appliqué à la carte de disparités uniquement dans les zones d'occultation qui n'ont pas été remplies par l'algorithme d'estimation des disparités. Ce filtrage permet d'éliminer les erreurs d'estimation (*outliers*) dans les zones d'occultation afin qu'elles ne perturbent pas le remplissage de ces zones, comme illustré par les Figures 4a et 4b. En effet, le filtre morphologique opère un lissage des trous présents dans la carte et permet ainsi d'éviter que des erreurs ne soient propagées par un remplissage ultérieur des zones d'occultation, qui exploite des valeurs du voisinage d'un pixel invalide considéré.

Les **Figures 7a** et **7b** représentent respectivement le même détail de la carte de disparités représentée à la Figure 4a, avant application d'un filtre morphologique (Figure 7a), et après application d'un filtre morphologique (Figure 7b). Ainsi, dans l'image de gauche (Fig. 7a), dans la zone entourée, deux points de couleur grise, correspondant à des erreurs d'estimation, présents autour du pouce droit de la personne représentée sur l'image, ont disparu dans l'image de droite (Fig. 7b).

De retour à la Figure 6, dans le mode de réalisation décrit, après avoir subi le filtrage morphologique précité (opération B), la carte de disparités subit alors une opération, notée C, d'uniformisation locale, mise en oeuvre par le module d'uniformisation locale 62.

Au cours de cette opération C, un second filtrage est appliqué à la carte de disparités. Contrairement au filtrage de l'opération B, ce second filtrage est appliqué à l'ensemble de la carte, de manière à uniformiser localement la carte de disparités tout en préservant les détails sur les contours des objets. Ainsi, le filtrage appliqué permet en particulier de supprimer ou de fusionner les petites zones d'occultations dues aux objets très détaillés (tels que par exemple des arbres) qui rendent les cartes de disparités/profondeurs très instables temporellement, dans le cas de vidéos notamment.

Le second filtrage mis en oeuvre par le module 62, opère comme suit. Les erreurs d'estimation (*outliers*) sont détectées par un parcours complet de l'image de disparités/profondeur. Pour chaque pixel de la carte, on considère un voisinage V correspondant à l'ensemble des pixels voisins $v_i$ contenus dans un bloc centré sur le pixel considéré. Les pixels voisins $v_i$ à l'intérieur du bloc sont étudiés afin d'évaluer le nombre de pixels du bloc ayant une valeur similaire et ceux ayant une valeur différente, de la valeur associée au pixel, noté p, considéré. Les blocs de pixels considérés peuvent être par exemple des carrés de 7 pixels de coté, cependant la taille des blocs peut être modifiée par l'utilisateur du dispositif de traitement d'image selon l'invention, en fonction du type d'images traitées.

Les notions de similarité et de différence de valeur de pixels sont définies en référence à des seuils $s_1$ et $s_3$, afin de rendre le traitement plus robuste. Ainsi, des pixels $v_i$ d'un voisinage V autour d'un pixel p, sont considérés comme similaires si la différence entre leurs valeurs est inférieure au seuil $s_1$ (qui peut être fixé à 10 par exemple), comme exprimé par l'expression mathématique ci-après :

$$\forall v_i \in V \; v_i \text{ et } p \text{ sont similaires} \Leftrightarrow |p\text{-}v_i| \leq s_1$$

De même, on définit la notion de différence de valeur, en référence à un seuil $s_3$ (qui peut être fixé à 40 par exemple) :

$$\forall v_i \in V \; v_i \text{ et } p \text{ sont différents} \Leftrightarrow |p\text{-}v_i| \geq s_3$$

Pour chaque pixel considéré du bloc analysé, si la proportion de pixels similaires dans le bloc est inférieure à un seuil $s_2$, et/ou si la proportion des pixels différents est supérieure à un seuil $s_4$, alors le pixel considéré est détecté comme un pixel en erreur (*outlier*). Par exemple, on pourra prendre : $s_2$ = 30% et $s_4$ = 60%). La valeur de correction à affecter à un pixel identifié comme étant en erreur (*outlier*) est alors celle obtenue par un filtrage médian sur le bloc utilisé pour la détection de l'erreur.

Le traitement appliqué par est résumé par la formule suivante :

*Si*

$$\left( \frac{\sum_{v_i \in V} \{ |p - v_i| \leq s_1 \}}{\sum_{v_i \in V} 1} \geq s_2 \right) OU \left( \frac{\sum_{v_i \in V} \{ |p - v_i| \geq s_3 \}}{\sum_{v_i \in V} 1} \leq s_4 \right)$$

*alors*

$$p = mediane_{v_i \in V}(v_i)$$

Les seuils utilisés, $s_1$, $s_2$, $s_3$, $s_4$, peuvent être modifiés par l'utilisateur en fonction de l'image ou de la séquence considérée.

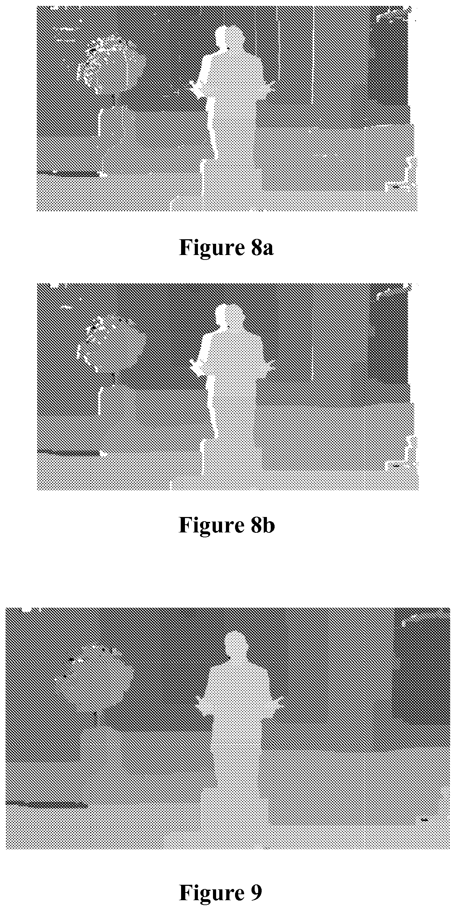

Les **Figures 8a** et **8b** illustrent le résultat de l'application d'un filtre d'uniformisation locale, tel que décrit ci-dessus, sur une carte de disparités obtenue après application d'un filtre morphologique tel que mis en oeuvre par le module de filtrage 61 précité. En particulier, la Figure 8a représente dans son ensemble la carte de disparités de laquelle est issu le détail représenté à la Figure 7b. La Figure 8b représente la carte obtenue après application du filtre d'uniformisation locale à la carte de la Figure 8a.

Comme on peut le voir, en comparant les Figures 8a et 8b, des tâches blanches présentes dans l'image de la Figure 8a ont disparues dans l'image de la Figure 8b. Ainsi, grâce au filtrage d'uniformisation locale opéré par le module de filtrage 62 décrit plus haut, des pixels non cohérents géométriquement avec leur voisinage, présents dans la carte de la Figure 8a, ont été traités dans la carte de la Figure 8b.

Enfin, La **Figure 9** montre la carte de disparités de la Figure 8b après traitement de remplissage des zones d'occultations, selon la présente invention, mis en oeuvre par le module 63 de remplissage décrit plus haut.

En comparant la carte de la Figure 9 avec la carte initiale représentée à la Figure 3, ainsi qu'avec le détail de cette même carte, représenté à la Figure 4b et obtenu après traitement de la carte par un procédé de remplissage selon l'état de la technique, on observe notamment les points suivants concernant la carte de la Figure 9, obtenue selon l'invention :

- celle-ci apparaît nettement plus uniforme, et
- les zones d'occultations autour du personnage ont disparues, tout en maintenant la précision des détails comme par exemple autour de la main droite du personnage.

**Revendications**

1. Procédé de remplissage des zones d'occultation d'une carte de profondeur ou de disparités, ladite carte étant estimée à partir d'au moins deux images stéréoscopiques d'une scène et étant constituée d'une matrice de pixels formant un ensemble de lignes et de colonnes, chaque pixel de la carte étant associé à une valeur de profondeur ou de disparités, dite "valeur de pixel", et un pixel quelconque d'une zone d'occultation, dit "pixel invalide", étant associé à une valeur de pixel identifiable comme étant invalide,
ledit procédé étant **caractérisé en ce qu'**il comprend le parcours (E1, E2, E10) pixel-par-pixel de chaque ligne de la carte dans un sens prédéfini et l'affectation à chaque pixel invalide Pi rencontré (E3) sur une ligne courante, d'une valeur déterminée (E4-E9) en fonction des valeurs associées aux pixels appartenant à un voisinage prédéfini autour du premier pixel valide P1, s'il existe, qui suit le pixel invalide Pi sur la ligne courante et dont la valeur, V(P1), correspond à une profondeur supérieure ou à une disparité inférieure par rapport à la valeur, V(P0), du dernier pixel valide, P0, s'il existe, qui précède le pixel invalide Pi sur la ligne courante et dans lequel ladite carte de profondeur ou de disparité est obtenue à partir d'un couple d'images droite et gauche, et dans lequel le sens prédéfini de parcours d'une ligne de pixels considérée de la carte, correspond au sens de la droite vers la gauche si la carte est basée sur l'image gauche, et correspond au sens de la gauche vers la droite si la carte est basée sur l'image droite.

2. Procédé selon la revendication 1, dans lequel s'il existe (E5) un pixel valide P0 mais qu'il n'existe pas (E7) de pixel valide P1, alors on affecte (E21-E23, E25, E9) au pixel invalide Pi une valeur de pixel déterminée en fonction des valeurs associées aux pixels appartenant à un voisinage prédéfini autour du premier pixel valide P2, s'il existe, qui suit le pixel invalide Pi sur la ligne courante.

3. Procédé selon la revendication 2, dans lequel, s'il n'existe pas (E22) de pixel valide P2, alors on affecte (E24, E25, E9)) au pixel invalide Pi une valeur de pixel déterminée en fonction des valeurs associées aux pixels appartenant à un voisinage prédéfini autour du pixel P0.

4. Procédé selon la revendication 1, dans lequel, s'il n'existe pas (E5) de pixel valide P0, on affecte (E11-E13, E16, E9) au pixel invalide Pi une valeur de pixel déterminée en fonction des valeurs associées aux pixels appartenant à un voisinage prédéfini autour du premier pixel valide P2, s'il existe, qui suit le pixel invalide Pi sur la ligne courante ; sinon, si un pixel valide P2 n'existe pas (E12), on affecte (E14) au pixel invalide Pi une valeur par défaut Vd.

5. Procédé selon l'une quelconque des revendications précédentes, dans lequel la valeur de pixel affectée au pixel invalide Pi est déterminée en fonction des valeurs associées aux pixels du voisinage d'un pixel considéré, par application de la fonction de médiane ou de moyenne mathématique auxdites valeurs de pixels du voisinage considéré.

6. Procédé selon l'une des revendications précédentes, dans lequel un voisinage autour d'un pixel considéré est constitué d'un bloc de pixels valides centré sur le pixel considéré.

7. Procédé de traitement numérique d'une carte de profondeur ou de disparités, caractérisé en qu'il inclut une opération (D) de remplissage des zones d'occultation selon le procédé revendiqué dans l'une quelconque des revendications précédentes.

8. Procédé de traitement selon la revendication 7, dans lequel l'opération (D) de remplissage des zones d'occultation, est précédée d'une opération (B) de filtrage morphologique de fermeture, destinée à éliminer les erreurs d'estimation dans les zones d'occultation de la carte.

9. Procédé de traitement selon l'une des revendications 7 ou 8, dans lequel l'opération (D) de remplissage des zones d'occultation, est précédée d'une opération (C) d'uniformisation locale de la carte, mettant en oeuvre sur l'ensemble de la carte, un filtrage médian des valeurs des pixels analysés par bloc de taille prédéfinie.

**10.** Dispositif de traitement numérique d'une carte de profondeur ou de disparités, **caractérisé en ce qu'**il inclut un module (63) de remplissage des zones d'occultation de la carte, ledit module étant apte à mettre en oeuvre un procédé de remplissage selon l'une quelconque des revendications 1 à 6.

**11.** Dispositif selon la revendication 10, **caractérisé en ce qu'**il comporte en outre un module (61) de filtrage morphologique de fermeture, destiné à éliminer les erreurs d'estimation dans les zones d'occultation de la carte, préalablement au remplissage des zones d'occultation.

**12.** Dispositif selon l'une des revendications 10 ou 11, **caractérisé en ce qu'**il comporte en outre un module (62) d'uniformisation locale de la carte, mettant en oeuvre sur l'ensemble de la carte, un filtrage médian des valeurs de pixels analysés par bloc de taille prédéfinie, préalablement au remplissage des zones d'occultation.

**13.** Programme d'ordinateur de traitement d'images numériques, **caractérisé en ce qu'**il comporte des instructions aptes à mettre en oeuvre un procédé selon l'une quelconque des revendications 1 à 9, lorsque ce programme est exécuté dans un système d'ordinateur.

**Patentansprüche**

**1.** Verfahren zur Füllung der Verdunkelungsbereiche einer Tiefen- oder Disparitätskarte, wobei die Karte ausgehend von mindestens zwei stereoskopischen Bildern einer Szene geschätzt wird und aus einer Matrix aus Pixeln besteht, die eine Anordnung von Zeilen und Spalten bildet, wobei jedes Pixel der Karte einem Tiefen- oder Disparitätswert, "Pixelwert" genannt, zugeordnet ist und ein beliebiges Pixel eines Verdunkelungsbereichs, "ungültiges Pixel" genannt, einem Pixelwert zugeordnet ist, der als ungültig identifizierbar ist,
wobei das Verfahren **dadurch gekennzeichnet ist, dass** es das pixelweise Durchlaufen (E1, E2, E10) jeder Zeile der Karte in einer vorgegebenen Richtung und die Zuweisung eines Werts (E4-E9) zu jedem in einer aktuellen Zeile vorgefundenen ungültigen Pixel Pi (E3) umfasst, der in Abhängigkeit von den Werten bestimmt wird, die den Pixeln zugeordnet sind, die einer vorgegebenen Umgebung um das erste gültige Pixel P1, falls vorhanden, angehören, das auf das ungültige Pixel Pi in der aktuellen Zeile folgt und dessen Wert, V(P1), einer größeren Tiefe oder einer geringeren Disparität in Bezug auf den Wert, V(P0), des letzten gültigen Pixels, P0, falls vorhanden, entspricht, das dem ungültigen Pixel Pi in der aktuellen Zeile vorausgeht, wobei die Tiefen- oder Disparitätskarte ausgehend von einem Paar rechter und linker Bilder erhalten wird und wobei die vorgegebene Durchlaufrichtung einer betrachteten Pixelzeile der Karte der Richtung von rechts nach links entspricht, wenn die Karte auf dem linken Bild basiert, und der Richtung von links nach rechts, wenn die Karte auf dem rechten Bild basiert.

**2.** Verfahren nach Anspruch 1, wobei, falls ein gültiges Pixel P0 vorhanden ist (E5), aber kein gültiges Pixel P1 vorhanden ist (E7), dem ungültigen Pixel Pi ein Pixelwert zugewiesen wird (E21-E23, E25, E9), der in Abhängigkeit von den Werten bestimmt wird, die den Pixeln zugeordnet sind, die einer vorgegebenen Umgebung um das erste gültige Pixel P2, falls vorhanden, angehören, das auf das ungültige Pixel Pi in der aktuellen Zeile folgt.

**3.** Verfahren nach Anspruch 2, wobei, falls kein gültiges Pixel P2 vorhanden ist (E22), dem ungültigen Pixel Pi ein Pixelwert zugewiesen wird (E24, E25, E9), der in Abhängigkeit von den Werten bestimmt wird, die den Pixeln zugeordnet sind, die einer vorgegebenen Umgebung um das Pixel P0 angehören.

**4.** Verfahren nach Anspruch 1, wobei, falls kein gültiges Pixel P0 vorhanden ist (E5), dem ungültigen Pixel Pi ein Pixelwert zugewiesen wird (E11-E13, E16, E9), der in Abhängigkeit von den Werten bestimmt wird, die den Pixeln zugeordnet sind, die einer vorgegebenen Umgebung um das erste gültige Pixel P2, falls vorhanden, angehören, das auf das ungültige Pixel Pi in der aktuellen Zeile folgt; andernfalls, falls kein gültiges Pixel P2 vorhanden ist (E12), wird dem ungültigen Pixel Pi ein Standardwert Vd zugewiesen (E14).

**5.** Verfahren nach einem der vorhergehenden Ansprüche, wobei der Pixelwert, der dem ungültigen Pixel Pi zugewiesen wird, in Abhängigkeit von den Werten, die den Pixeln der Umgebung eines betrachteten Pixels zugeordnet sind, durch Anwenden der mathematischen Median- oder Mittelwertfunktion auf die Pixelwerte der betrachteten Umgebung bestimmt wird.

**6.** Verfahren nach einem der vorhergehenden Ansprüche, wobei eine Umgebung um ein betrachtetes Pixel aus einem Block gültiger Pixel besteht, der auf das betrachtete Pixel zentriert ist.

7. Verfahren zur digitalen Verarbeitung einer Tiefen- oder Disparitätskarte, **dadurch gekennzeichnet, dass** es einen Vorgang (D) der Füllung der Verdunkelungsbereiche nach dem in einem der vorhergehenden Ansprüche beanspruchten Verfahren beinhaltet.

8. Verarbeitungsverfahren nach Anspruch 7, wobei dem Vorgang (D) der Füllung der Verdunkelungsbereiche ein Vorgang (B) der morphologischen Schließungsfilterung vorausgeht, der dazu dient, die Schätzfehler in den Verdunkelungsbereichen der Karte zu beseitigen.

9. Verarbeitungsverfahren nach einem der Ansprüche 7 oder 8, wobei dem Vorgang (D) der Füllung der Verdunkelungsbereiche ein Vorgang (C) der lokalen Vereinheitlichung der Karte vorausgeht, bei dem an der gesamten Karte eine Medianfilterung der Werte der nach Blöcken vorgegebener Größe analysierten Pixel durchgeführt wird.

10. Vorrichtung zur digitalen Verarbeitung einer Tiefen- oder Disparitätskarte, **dadurch gekennzeichnet, dass** sie ein Modul (63) zur Füllung der Verdunkelungsbereiche der Karte beinhaltet, wobei das Modul geeignet ist, ein Füllungsverfahren nach einem der Ansprüche 1 bis 6 durchzuführen.

11. Vorrichtung nach Anspruch 10, **dadurch gekennzeichnet, dass** es darüber hinaus ein Modul (61) zur morphologischen Schließungsfilterung umfasst, das dazu dient, vor der Füllung der Verdunkelungsbereiche die Schätzfehler in den Verdunkelungsbereichen der Karte zu beseitigen.

12. Vorrichtung nach einem der Ansprüche 10 oder 11, **dadurch gekennzeichnet, dass** es darüber hinaus ein Modul (62) zur lokalen Vereinheitlichung der Karte umfasst, das an der gesamten Karte vor der Füllung der Verdunkelungsbereiche eine Medianfilterung der Werte von Pixeln, die nach Blöcken vorgegebener Größe analysiert werden, durchführt.

13. Computerprogramm zur Verarbeitung digitaler Bilder, **dadurch gekennzeichnet, dass** es Anweisungen umfasst, die geeignet sind, ein Verfahren nach einem der Ansprüche 1 bis 9 durchzuführen, wenn dieses Programm in einem Computersystem ausgeführt wird.

**Claims**

1. Method for filling occulted zones of a depth or disparity map, said map being estimated on the basis of at least two stereoscopic images of a scene and consisting of a matrix-array of pixels forming a set of rows and columns, each pixel of the map being associated with a depth or disparity value called the "pixel value", and any so-called "invalid pixels" of an occulted zone being associated with a pixel value identifiable as being invalid, said method being **characterized in that** it comprises tracing (E1, E2, E10), pixel-by-pixel, each row of the map in a predefined direction and assigning, to each invalid pixel Pi encountered (E3) in a current row, a value determined (E4-E9) depending on the values associated with the pixels belonging to a predefined vicinity around the first valid pixel P1, if it exists, that follows the invalid pixel Pi in the current row and the value, V(P1), of which corresponds to a depth that is larger or to a disparity that is smaller with respect to the value, V(P0), of the last valid pixel, P0, if it exists, that precedes the invalid pixel Pi in the current row and wherein said disparity or depth map is obtained on the basis of a pair of right and left images, and wherein the predefined direction in which a given row of pixels of the map is traced corresponds to the direction from right to left if the map is based on the left image, and corresponds to the direction from left to right if the map is based on the right image.

2. Method according to Claim 1, wherein if a valid pixel P0 exists (E5) but a valid pixel P1 does not exist (E7) then the pixel value assigned (E21-E23, E25, E9) to the invalid pixel Pi is a pixel value determined depending on the values associated with the pixels belonging to a predefined vicinity around the first valid pixel P2, if it exists, that follows the invalid pixel Pi in the current row.

3. Method according to Claim 2, wherein, if a valid pixel P2 does not exist (E22), then the pixel value assigned (E24, E25, E9) to the invalid pixel Pi is a pixel value determined depending on the values associated with the pixels belonging to a predefined vicinity around the pixel P0.

4. Method according to Claim 1, wherein, if a valid pixel P0 does not exist (E5), the pixel value assigned (E11-E13, E16, E9) to the invalid pixel Pi is a pixel value determined depending on the values associated with the pixels belonging to a predefined vicinity around the first valid pixel P2, if it exists, that follows the invalid pixel Pi in the current row; otherwise, if a valid pixel P2 does not exist (E12), a default value Vd is assigned (E14) to the invalid pixel Pi.

5. Method according to any one of the preceding claims, wherein the pixel value assigned to the invalid pixel Pi is determined depending on the values associated with the pixels in the vicinity of a given pixel, by applying the mathematical mean or median function to said pixel values of the given vicinity.

6. Method according to one of the preceding claims, wherein a vicinity around a given pixel consists of a block of valid pixels centred on the given pixel.

7. Method for digitally processing a disparity or depth map, **characterized in that** it includes an operation (D) of filling occulted zones according to the method claimed in any one of the preceding claims.

8. Processing method according to Claim 7, wherein the operation (D) of filling occulted zones is preceded by an operation (B) of morphological-closing filtering, which operation is intended to remove estimation errors in the occulted zones of the map.

9. Processing method according to either of Claims 7 and 8, wherein the operation (D) of filling the occulted zones is preceded by an operation (C) of locally uniformizing the map, this operation implementing, on the whole map, median filtering of the values of the pixels analysed per block of predefined size.

10. Device for digitally processing a disparity or depth map, **characterized in that** it includes a module (63) for filling occulted zones of the map, said module being able to implement a filling method according to any one of Claims 1 to 6.

11. Device according to Claim 10, **characterized in that** it furthermore includes a morphological-closing filtering module (61) that is intended to remove estimation errors in the occulted zones of the map, prior to the filling of the occulted zones.

12. Device according to either of Claims 10 and 11, **characterized in that** it further includes a module (62) for locally uniformizing the map, implementing, on the whole map, median filtering of the pixel values, the pixels being analysed per block of predefined size, prior to the filling of the occulted zones.

13. Computer program for processing digital images, **characterized in that** it includes instructions able to implement a method according to any one of Claims 1 to 9, when this program is executed in a computer system.

**Figure 1**

**Figure 2a**

**Figure 2b**

**Figure 3**

**Figure 4a**

**Figure 4b**

Début

E1

Sélectionner ligne de la carte de
profondeur/disparités = ligne courante

E2

Sélectionner pixel = pixel courant Pc

E3

Pc = Pi ?

0 → Test E10

1

E4

Rechercher dernier pixel valide P0
précédent Pi sur ligne courante

E5

P0 existe ?

0 → CAS 1

1

E6

Rechercher premier pixel valide P1
suivant Pi sur la ligne tel que :
V(P1) > V(P0)

E7

P1 existe ?

0 → CAS 2

1

E8

Déterminer voisinage N1 de pixels autour
de P1 ; Ncal = N1

E9

Val_Pi →

Calcul de la valeur de pixel Vcal(Pi) à
affecter à Pi à partir des valeurs des
pixels du voisinage Ncal

Test E10 →

E10

Ligne terminée,
carte terminée ?

00          10

11

Fin

**Figure 5a**

**Figure 5b**

Im

60

A: Estimation carte de profondeur/disparités

Cin

61

B: Elimination erreurs d'estimation dans zones d'occultation

62

C: Uniformisation locale

Cout

63

D:
Remplissage des zones d'occultation

**Figure 6**

**Figure 7a**

**Figure 7b**

**Figure 8a**

**Figure 8b**

**Figure 9**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **DE V. KOLMOGOROV ; R. ZABIH.** Multi-camera scene reconstruction via graph cuts. *Proceedings of the European Conference on Computer Vision,* 2002
- **DE C. VÁZQUEZ, W. J. TAM ; F. SPERANZA.** Stereoscopic imaging: Filling disoccluded areas in image-based rendering. *Proceedings of the SPIE Three-Dimensional TV, Video, and Display,* 2006, vol. 6392, 0D1-0D12
- **DE J. YIN ; J. R. COOPERSTOCK.** Improving depth maps by nonlinear diffusion. *Proc. 12th International Conference Computer Graphics, Visualization and Computer Vision,* Février 2004
- **DE YANNICK MORVAN ; DIRK FARIN ; PETER H.N. DE WITH.** Design Considerations for View Interpolation in a 3D Video Coding Framework. *27th Symposium on Information Theory in the Benelux,* Juin 2006, vol. 1
- **DE ABHIJIT OGALE ; CORNELIA FERMULLER ; YIANNIS ALOIMONOS.** Occlusions in motion processing. *SpatioTemporal Image Processing,* Mars 2004
- **FAN LIANGZHONG et al.** *Dynamic programming based ray-space interpolation for free-viewpoint video system*